# EUROPÄISCHE PATENTSCHRIFT

(11) **EP 2 195 760 B1**
(45) Veröffentlichungstag und Bekanntmachung des Hinweises auf die Patenterteilung: **11.05.2011**
(21) Anmeldenummer: 08707165.0
(22) Anmeldetag: 21.01.2008
(51) Int. Cl.: G06F 21/00

(54) **SCHUTZANORDNUNG UND HERSTELLUNGSVERFAHREN FÜR EINE SCHUTZANORDNUNG**
PROTECTIVE ARRANGEMENT AND METHOD FOR PRODUCING A PROTECTIVE ARRANGEMENT
DISPOSITIF DE PROTECTION ET PROCÉDÉ DE FABRICATION D'UN DISPOSITIF DE PROTECTION

(30) Priorität: 26.09.2007 DE 102007046026
(43) Veröffentlichungstag der Anmeldung: 16.06.2010
(73) Patentinhaber: Rohde & Schwarz SIT GmbH, 12489 Berlin (DE)
(72) Erfinder: APITZ, Thilo, 10829 Berlin (DE); VOLL, Ingo, 14641 Wustermark (DE); HEMPEL, Michael, 13125 Berlin (DE)
(74) Vertreter: Körfer, Thomas
(86) Internationale Anmeldenummer: PCT/EP2008/000432
(87) Internationale Veröffentlichungsnummer: WO 2009/043387

(56) Entgegenhaltungen:
- EP-A- 1 557 736
- EP-A- 1 650 249
- WO-A-01/59544
- US-A1- 2004 222 014

## Beschreibung

Die vorliegende Erfindung betrifft eine Schutzanordnung für zu schützende Bauelemente auf einer Leiterplatte sowie ein Verfahren zur Herstellung einer Schutzanordnung.

Innerhalb von elektronischen Geräten auf dem Gebiet der Informationssicherheit werden sicherheitsrelevante Objekte in abgeschlossenen technischen Einheiten, den sogenannten Sicherheitsmodulen zusammengefasst. Eine weitere Aufgabe solcher Sicherheitsmodule ist es, den Aufbau der Leiterplatten vor einem Ausspähen und Kopieren zu schützen.

Solche Sicherheitsmodule verfügen über Anti-Tamper-Mechanismen zum Schutz der enthaltenen Sicherheitsobjekte. Zu diesen Mechanismen gehört eine äußere Schutzhülle, mit der Angriffe auf das Innere eines Moduls erkannt werden können (Tamper detection), um daraus entsprechende Schutzreaktionen ableiten zu können (Tamper response).

Eine Realisierungsmöglichkeit für solche Schutzhüllen ist ein Bohrschutzsensor, wie er z.B. aus der DE 197 05 518 A1 bekannt ist. Der Bohrschutzsensor wird von einer elektronischen Auswerteschaltung überwacht, die das Eindringen von mechanischen Werkzeugen wie Bohrer, Laser oder Sonden detektiert und eine Tamper response aktiviert. Es sind verschiedene Möglichkeiten zur Realisierung eines Bohrschutzsensors denkbar.

Eine erste Möglichkeit besteht darin, das zu schützende Modul mit Folien zu umwickeln bzw. in Folien einzubetten und die Hohlräume zwischen der Folie und dem Modul mit Giesharz oder einer anderen Vergussmaße auszugießen. Die Hauptprobleme dieser Technik sind eine aufwendige Fertigung, welche meist per Hand geschieht sowie eine nicht sicher reproduzierbare Fertigungsqualität sowie eine Streuung der elektrischen Eigenschaften des Bohrschutzsensors außerhalb zulässiger Toleranzen. Des Weiteren ist durch das beschriebene Verfahren eine rundum vorhandene Abdeckung des zu schützenden Objektes nicht möglich, da in der Bohrschutzfolie prozessbedingte Öffnungen entstehen, die zum Einbringen der Vergussmaße erforderlich sind.

Eine zweite Möglichkeit besteht darin, Tamper Schutzhüllen mit elektrischen Leiterstrukturen aus Leiterplattenmaterial, die das zu schützende Modul umhüllen, zu verwenden. Beispielsweise kann eine Haube aus Leiterplattenmaterial vorgesehen sein oder Bauelemente können in einer Leiterplatte integriert sein. Hierfür wird die hergestellte Haube ausgefräst und mit der Leiterplatte verlötet. Nachteilig bei diesem Verfahren ist eine aufwendige Herstellung sowie hohe Kosten bei der Herstellung. Des Weiteren können die bei einer zerstörenden Analyse erhaltenen Daten über den Aufbau des Schutzsensors für Angriffe auf weitere Module verwendet werden. Eine kostengünstige Realisierung bei derartigen Schutzsensoren ist nur bei einer geringen Bauhöhe möglich.

In der Druckschrift US 5,369,299 ist ein Schaltkreis mit einem Manipulationsschutz offenbart. Hierbei werden Teile des Schaltkreises mit einer Schutzschicht überzogen und an einigen Stellen wird eine Öffnung in der Schutzschicht belassen. Diese Schutzschicht wird dann mit weiteren Schutzschichten überzogen. Ein Wegätzen der Schutzschichten führt aufgrund der Öffnungen innerhalb der unteren Schutzschicht gleichzeitig zu einem Wegätzen des Schaltkreises, zerstört somit den Schaltkreis und die darin enthaltenen Informationen. Die Druckschrift schlägt hierbei vor, die Öffnungen in der untersten Schutzschicht zufällig über dem Schaltkreis zu verteilen, sodass jeder Schaltkreis eine andere Verteilung der Öffnungen hat. Nachteilig bei diesem Verfahren ist die aufwendige Herstellungstechnik.

Die Druckschrift EP 1 557 736 A1, welche den nächstliegenden Stand der Technik bildet, offenbart eine Leiterplattenanordnung, bei welcher die Leiterplatte und die elektronischen Bauteile durch eine Hülle und eine Schutzschicht geschützt werden. Mittels der Hülle sind die Bauteile teilweise umhüllt, zusätzlich ist auf der Leiterplatte eine Schutzschicht angeordnet, in welcher Leiterbahnen beispielsweise aus Kupfer vorgesehen sind. Diese Schutzschicht ist an der Stelle vorgesehen, welche nicht von der Hülle bedeckt wird. Eine Manipulation der Schutzanordnung wird durch eine entsprechende Auswerteeinheit entdeckt.

Die vorliegende Erfindung hat daher zur Aufgabe, eine Schutzanordnung, sowie ein Herstellungsverfahren für eine Schutzanordnung bereit zu stellen, welche die oben genannten Nachteile überwindet. Insbesondere soll die Schutzanordnung leicht und reproduzierbar zu fertigen sein, das zu schützende Objekt ohne Lücken umschließen und unterschiedliche Bauhöhen ermöglichen. Des weiteren wird eine Schutzanordnung offenbart, welche sich in jedem Exemplar in der Leiterbahnführung unterscheidet und somit hinsichtlich der mechanischen und elektrischen Eigenschaften zu einem Unikat wird.

Diese Aufgabe wird durch eine Schutzanordnung gemäß Anspruch 1 sowie durch ein Herstellungsverfahren gemäß Anspruch 13 gelöst.

Die vorliegende Erfindung betrifft eine Schutzanordnung umfassend eine Leiterplatte, eine zumindest auf einer Seite der Leiterplatte angeordnete Abdeckung, wobei die Abdeckung zufällig angeordnete Leiterbahnen aufweist, und eine Auswerteeinheit, wobei die Auswerteeinheit mit den Leiterbahnen verbunden und geeignet ist, die Leiterbahnen elektronisch auf Manipulation hin zu überprüfen.

Die Schutzanordnung der vorliegenden Erfindung ist dadurch gekennzeichnet, dass die Abdeckung aus einem mit Additiven versetzten Kunststoff besteht und dass die Leiterbahnen aus den mittels Laser aktivierten und anschließend metallisierten Additiven bestehen.

In einer ersten Ausführungsform ist die Abdeckung auf einer Seite der Leiterplatte angeordnet. Vorzugweise umfasst die Abdeckung einen Befestigungszapfen, welcher mit der Leiterplatte verbunden ist.

In einer zweiten Ausführungsform ist die Abdeckung auf beiden Seiten der Leiterplatte angeordnet. Vorzugsweise sind hierbei die Abdeckungen miteinander über Befestigungszapfen verbunden.

Die Auswerteeinheit kann auf der Leiterplatte angeordnet sein. Vorzugsweise ist Auswerteeinheit mit den Befestigungszapfen elektrisch verbunden.

In einer bevorzugten Ausführungsform ist die Auswerteinheit geeignet, eine Beschädigung eines Befestigungszapfens zu registrieren. In einer bevorzugten Ausführungsform ist die Auswerteeinheit mit den Leiterbahnen über Kontaktmittel elektrisch verbunden. Vorzugsweise ist die Auswerteeinheit geeignet, eine Beschädigung einer Leiterbahn zu registrieren.

Optional kann die Auswerteeinheit Daten hinsichtlich der elektrischen Eigenschaften der Leiterbahnen, vorzugsweise hinsichtlich der Widerstände, Kapazität und/oder Induktivität, erfassen.

Vorzugsweise ist die Auswerteeinheit geeignet, auf Basis der elektrischen Eigenschaften der Leiterbahnen eine die Leiterbahnen nicht beschädigende Manipulation, insbesondere eine Kontaktierung und/oder Überbrückung der Leiterbahnen, zu registrieren.

Die vorliegende Erfindung betrifft des Weiteren ein Herstellungsverfahren für eine Schutzanordnung umfassend die Schritte:
- Herstellen einer Abdeckung,
- Generieren von Zufallsparametern,
- Erstellen von mittels der Zufallsparameter zufällig angeordneten Leiterbahnen auf der Abdeckung und
- Anordnen der Abdeckung auf zumindest einer Seite einer Leiterplatte.

Das Herstellungsverfahren für eine Schutzanordnung ist dadurch gekennzeichnet, dass das Herstellen der Abdeckung folgende Schritte umfasst:
- Bereitstellen eines mit Additiven versetzten Kunststoffes und
- Spritzgießen einer Kunststoffhaube als Abdeckung und dass das Erstellen der Leiterbahnen folgende Schritte umfasst:
- Aktivieren der Additive mittels Laser und
- Metallisieren der aktivierten Leiterbahnen.

Vorzugsweise umfasst das Verfahren das Metallisieren der aktivierten Leiterbahnen mittels eines chemischen Bades. Hierbei kann das Metallisieren das Aufbringen einer Schicht aus Kupfer, Nickel, Gold, Zinn, Blei und/oder Silber umfassen.

In einer bevorzugten Ausführungsform umfasst das Verfahren das Bereitstellen einer Auswerteeinheit, welche mit den Leiterbahnen verbunden und geeignet ist, die Leiterbahnen elektronisch auf Manipulation hin zu überprüfen.

Vorzugsweise umfasst das Verfahren die Berechnung elektrischer Eigenschaften der Leiterbahnen und Übermitteln der berechneten Daten an die Auswerteinheit.

Ein bevorzugtes Ausführungsbeispiel der Erfindung wird anhand der Zeichnung im Folgenden beispielhaft weiter erläutert. In der Zeichnung zeigt:
- Fig. 1a: einen Querschnitt durch eine erfindungsgemäße Schutzanordnung entlang seiner Längsachse,
- Fig. 1b: eine Draufsicht auf eine Schutzanordnung gemäß der vorliegenden Erfindung,
- Fig. 2: ein schematisches Blockschaltbild einer Schutzanordnung gemäß der vorliegenden Erfindung und
- Fig. 3: ein Flussdiagramm mit den Schritten des erfindungsgemäßen Herstellungsverfahrens.

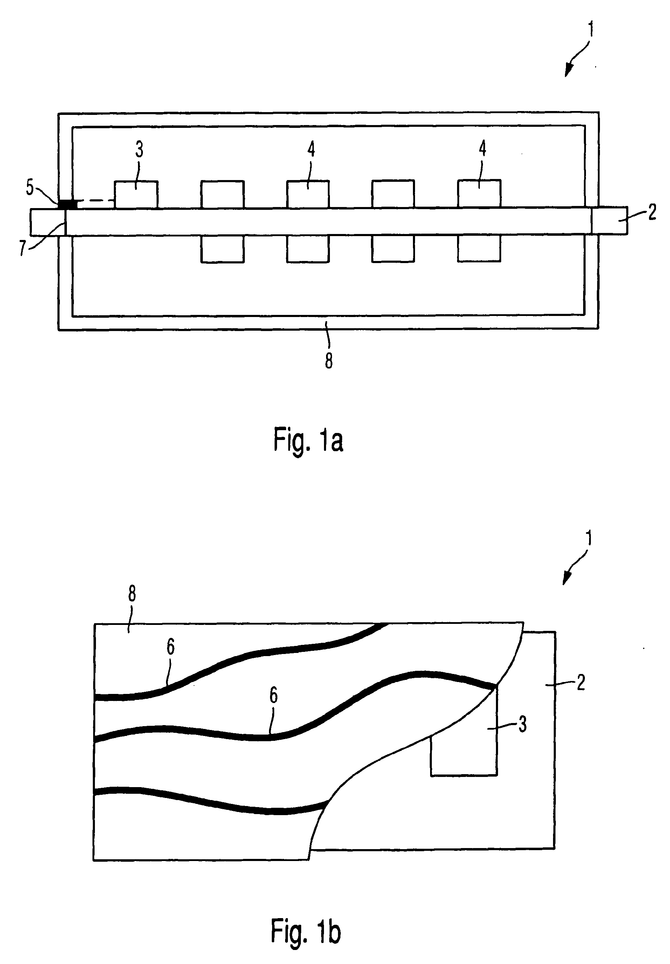

Fig. 1a zeigt eine Schutzanordnung 1, nachfolgend auch Schutzsensor, gemäß der vorliegenden Erfindung. Auf einer Leiterplatte 2 sind hierbei zu schützende Bauelemente 4 aufgebracht. Zum Schutz dieser Bauelemente ist eine Abdeckung 8 vorgesehen, welche auf der Leiterplatte 2 befestigt ist.

Wie in Fig. 1b dargestellt, umfasst die Abdeckung 8 Leiterbahnen 6 welche entlang der Abdeckung 8 aufgebracht sind. Des weiteren ist eine Auswerteeinheit 3 vorgesehen, welche entweder mit jeder einzelnen Leiterbahn 6 direkt verbunden ist oder über ein Kontaktmittel 5 mit den in Reihe oder parallel geschalteten Leiterbahnen 6 elektrisch leitend verbunden ist. Die Auswerteeinheit ist durch die elektronische Verbindung mit den Leiterbahnen 6 geeignet, die Leiterbahnen 6 auf Manipulation hin zu überprüfen. Ein Zerstören einer Leiterbahn 6 führt zum Ansprechen der Auswerteeinheit 3, sodass entsprechende Schutzmechanismen bzw. Tamper response mechanism aktiviert werden können. Beispielsweise können die Bauelemente 4 zerstört werden oder der Inhalt kann gelöscht werden.

Die Abdeckung 8 ist des weiteren mit Befestigungszapfen 7 an der Leiterplatte 2 oder an einer weiteren Abdeckung 8 befestigt. Die Befestigungszapfen 7 greifen hierbei in entsprechende Löcher der Leiterplatte 2 oder einer weiteren Abdeckung 8 ein. Die Befestigungszapfen 7 sind dabei mit den Löchern leitend verklebt oder verlötet. Die Befestigungszapfen 7 sind ebenfalls entweder direkt oder über Kontaktmittel 5 mit der Auswerteeinheit 3 elektrisch verbunden. Ein gewaltsames Lösen der Abdeckung 8 führt zum Zerstören der Befestigungszapfen und zum Ansprechen der Auswerteeinheit 3, welche entsprechend dann Schutzmechanismen auslösen kann.

Je nach Art der Leiterplatte kann nur auf einer Seite der Leiterplatte 2 oder auf beiden Seiten der Leiterplatte 2 eine Abdeckung 8 vorgesehen sein. Entsprechend greifen die Befestigungszapfen 7 der Abdeckung 8 entweder in Löcher in der Leiterplatte 2 ein oder können mit Löchern in der gegenüberliegend angeordneten Abdeckung 8 verbunden werden.

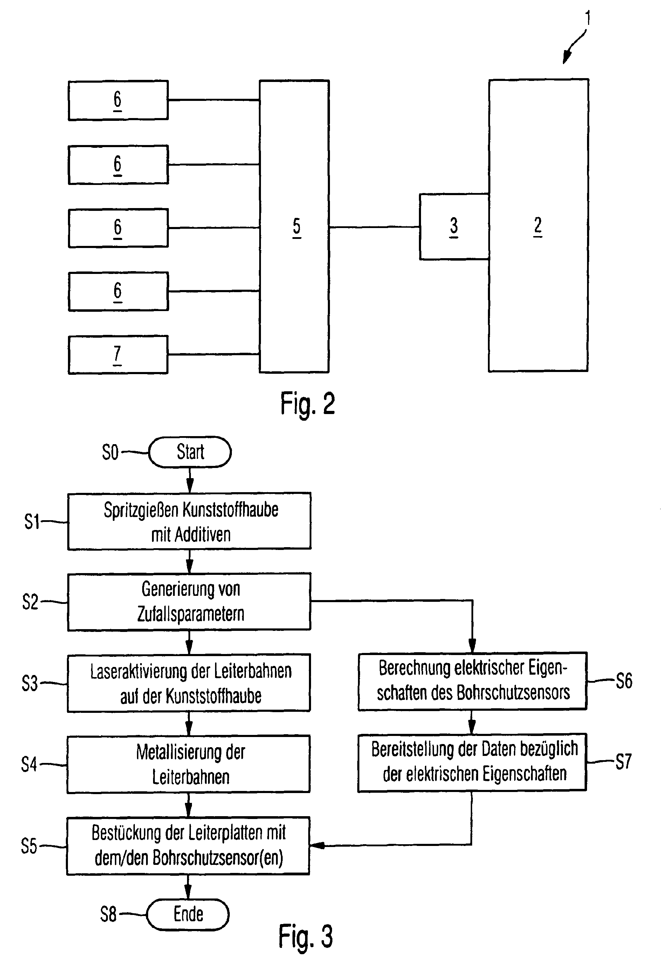

Fig. 2 zeigt noch einmal schematisch die Komponenten einer Schutzanordnung 1 gemäß der vorliegenden Erfindung. Mehrere Leiterbahnen 6 sowie der Befestigungszapfen 7 der Abdeckung 8 sind hierbei entweder über ein Kontaktmittel 5 oder direkt mit der Auswerteeinheit 3 verbunden. Vorzugsweise ist die Auswerteeinheit 3 auf der Leiterplatte 2 angeordnet. Insbesondere kann die Auswerteeinheit 3 mit den zu schützenden Bauteilen 4 derart verbunden sein, dass im Falle einer detektierten Manipulation die Auswerteeinheit 3 die Bauteile 4 zerstören oder die darauf befindlichen Daten löschen kann.

Das erfindungsgemäße Herstellungsverfahren für die Herstellung einer Schutzanordnung 1 wird im Folgenden anhand von Fig. 3 näher erläutert. Die Grundidee ist, dass die Abdeckung 8 durch eine im Spritzgussverfahren hergestellte Kunststoffhaube realisiert wird, auf der mithilfe eines Lasers rundum extrem feine Sensorstrukturen aufgebracht werden, die für jede Schutzanordnung individuell durch ein automatisches Computerprogramm erzeugt werden. Diese Sensorstrukturen werden anschließend chemisch metallisiert.

Der Fertigungsprozess beginnt in Schritt S0. Im ersten Schritt S1 wird eine Kunststoffhaube mittels Spritzgießen hergestellt. Als Kunststoff wird hierbei ein mit Additiven versetzter Kunststoff verwendet. Im folgenden Schritt S2 werden durch ein Computerprogramm Zufallsparameter generiert, sodass für jede Schutzanordnung 1 unterschiedliche Leiterbahnstrukturen aufgebracht werden können.

Im nächsten Schritt S3 erfolgt die Laseraktivierung der Leiterbahnen auf der Kunststoffhaube. Der Kunststoff enthält spezielle Additive für die Erzeugung metallischer Strukturen. Durch Laseraktivierung gehen diese Additive metallische Bindungen ein.

In folgendem Schritt S4 werden die laseraktivierten Bereiche dann durch chemische Abscheidung metallisiert. Dies kann durch chemische oder galvanische Bäder erfolgen. Insbesondere kann das Metallisieren dadurch erreicht werden, das eine Schicht aus Kupfer, Nickel, Gold, Zinn, Blei und/oder Silber aufgetragen wird.

In einer weiteren optionalen Ausführungsform der vorliegenden Erfindung können auf Basis der computergenerierten Zufallsparameter aus Schritt S2 die elektrischen Eigenschaften der Leiterbahnen und der Schutzanordnung 1 berechnet werden. Das heißt es können beispielsweise die Widerstände der Leiterstrecken berechnet werden, die Kapazität und/oder Induktivität des Schutzsensors. In einem nächsten Schritt S7 können dieses berechneten Daten bezüglich der elektrischen Eigenschaften der Auswerteeinheit 3 zur Verfügung gestellt werden, sodass die Auswerteeinheit 3 auf Basis dieser Daten eine Manipulation auch dann erkennt, wenn durch die Manipulation die Leiterbahnen 6 nicht beschädigt werden. Insbesondere kann die Auswerteeinheit 3 eine Kontaktierung und/oder Überbrückung der Leiterbahnen registrieren. In einem weiteren Schritt S5 wird dann die Leiterplatte 2 mit den Abdeckungen 8 entweder einseitig oder beidseitig bestückt. Falls die optionale Berechnung der elektrischen Eigenschaften erfolgt ist, werden diese Daten ebenfalls der Auswerteeinheit 3 bei der Bestückung der Leiterplatte 2 zur Verfügung gestellt. Der Fertigungsprozess endet in Schritt S8.

Bei der Generierung der Zufallsparameter und bei der Berechnung der genauen Lage der Leiterbahnen 6 bzw. Sensorstrukturen, werden unter anderem die Maße der Abdeckung 8 bzw. der Kunststoffhaube, die gewünschten minimalen und maximalen Leiterbahnabstände und die Leiterbahnbreite, die gewünschte minimale und maximale Leiterbahnlänge sowie die Position und Art der Kontaktmittel 5 mit berücksichtigt.

Die vorliegende Erfindung ist nicht auf Leiterbahnen 6, wie sie in Fig. 1b dargestellt sind, beschränkt, vielmehr können andere Arten von leitenden Flächen jeder Form und Größe auf die Abdeckung 8 aufgebracht werden und mit der Auswerteeinheit 3 zum Entdecken einer Manipulation verbunden werden.

Mit der vorliegenden Erfindung können Schutzanordnungen 1 realisiert werden, welche für jeden Schutzsensor ein Unikat darstellen, wodurch das Ausspähen der Leiterbahnanordnung einer Schutzanordnung 1 keine Rückschlüsse zulässt auf die Anordnung der Leiterbahnen 6 auf einer anderen Schutzanordnung 1. Mit dem der Erfindung zu Grunde liegenden Herstellungsverfahren wird eine gewünschte Parameterstreuung bei gleichzeitiger Reproduzierbarkeit der Ergebnisse sichergestellt. Durch die automatisierte Fertigung und die geringe Anzahl von Fertigungsschritten wird die Fertigungsqualität sichergestellt und es wird eine kostengünstige Herstellung ermöglicht. Die so produzierten Kunststoffhauben können durch automatische Bestückungsverfahren einfach weiterverarbeitet werden.

Die Erfindung ist nicht auf das beschriebene Ausführungsbeispiel beschränkt. Alle beschriebenen und/oder gezeichneten Merkmale sind im Rahmen der Erfindung kombinierbar.

## Patentansprüche

1. Schutzanordnung (1) umfassend
eine Leiterplatte (2),
eine zumindest auf einer Seite der Leiterplatte (2) angeordnete Abdeckung (8), wobei die Abdeckung (8) zufällig angeordnete Leiterbahnen (6) aufweist, und
eine Auswerteeinheit (3), wobei die Auswerteeinheit (3) mit den Leiterbahnen (6) verbunden und geeignet ist, die Leiterbahnen (6) elektronisch auf Manipulation hin zu überprüfen,
**dadurch gekennzeichnet**
**dass** die Abdeckung (8) aus einem mit Additiven versetzten Kunststoff besteht, und
**dass** die Leiterbahnen (6) aus den mittels Laser aktivierten und anschließend metallisierten Additiven bestehen.

2. Schutzanordnung (1) nach Anspruch 1,
wobei die Abdeckung (8) auf einer Seite der Leiterplatte (2) angeordnet ist.

3. Schutzanordnung (1) nach Anspruch 2,
wobei die Abdeckung (8) einen Befestigungszapfen (7) umfasst, welcher mit der Leiterplatte (2) verbunden ist.

4. Schutzanordnung (1) nach Anspruch 1,
wobei je eine Abdeckung (8) auf beiden Seiten der Leiterplatte (2) angeordnet ist.

5. Schutzanordnung (1) nach Anspruch 4,
wobei die Abdeckungen (8) miteinander über Befestigungszapfen (7) verbunden sind.

6. Schutzanordnung (1) nach einem der vorhergehenden Ansprüche,
wobei die Auswerteeinheit (3) auf der Leiterplatte (2) angeordnet ist.

7. Schutzanordnung (1) nach Anspruch 3 oder 5,
wobei die Auswerteeinheit (3) mit dem bzw. den Befestigungszapfen (7) elektrisch verbunden ist.

8. Schutzanordnung (1) nach Anspruch 7,
wobei die Auswerteinheit (3) geeignet ist, eine Beschädigung eines Befestigungszapfens (7) zu registrieren.

9. Schutzanordnung (1) nach einem der vorhergehenden Ansprüche,
wobei die Auswerteeinheit (3) mit den Leiterbahnen (6) über Kontaktmittel (5) elektrisch verbunden ist.

10. Schutzanordnung (1) nach einem der vorhergehenden Ansprüche,
wobei die Auswerteeinheit (3) geeignet ist, eine Beschädigung einer Leiterbahn (6) zu registrieren.

11. Schutzanordnung (1) nach einem der vorhergehenden Ansprüche,
wobei die Auswerteeinheit (3) Daten hinsichtlich der elektrischen Eigenschaften der Leiterbahnen (6), vorzugsweise hinsichtlich der Widerstände, Kapazität und/oder Induktivität, auswertet.

12. Schutzanordnung (1) nach Anspruch 11,
wobei die Auswerteeinheit (3) geeignet ist, auf Basis der elektrischen Eigenschaften der Leiterbahnen (6) eine die Leiterbahnen (6) nicht beschädigende Manipulation, insbesondere eine Kontaktierung und/oder Überbrückung der Leiterbahnen (6) zu registrieren.

13. Herstellungsverfahren für eine Schutzanordnung (1) umfassend die Schritte:
- Herstellen (S1) einer Abdeckung (8),
- Generieren (S2) von Zufallsparametern,
- Erstellen (S3, S4) von mittels der Zufallsparameter zufällig angeordneten Leiterbahnen (6) auf der Abdeckung (8) und
- Anordnen der Abdeckung (8) auf zumindest einer Seite einer Leiterplatte (2),
**dadurch gekennzeichnet,**
**dass** das Herstellen der Abdeckung (8) folgende Schritte umfasst:
- Bereitstellen eines mit Additiven versetzten Kunststoffes und
- Spritzgießen (S1) einer Kunststoffhaube als Abdeckung (8) und
**dass** das Erstellen der Leiterbahnen (6) folgende Schritte umfasst:
- Aktivieren (S3) der Additive mittels Laser und
- Metallisieren (S4) der aktivierten Leiterbahnen (6).

14. Verfahren nach Anspruch 13,
umfassend das Metallisieren (S4) der aktivierten Leiterbahnen (6) mittels eines chemischen Bades.

15. Verfahren nach einem der Ansprüche 13 oder 14,
wobei das Metallisieren (S4) das Aufbringen einer Schicht aus Kupfer, Nickel, Gold, Zinn, Blei und/oder Silber umfasst.

16. Verfahren nach einem der vorhergehenden Ansprüche, umfassend das Bereitstellen (S5) einer Auswerteeinheit (3), welche mit den Leiterbahnen (6) verbunden und geeignet ist, die Leiterbahnen (6) elektronisch auf Manipulation hin zu überprüfen.

17. Verfahren nach Anspruch 16,
umfassend die Berechnung (S6) elektrischer Eigenschaften der Leiterbahnen (6) und Übermitteln (S7) der berechneten Daten an die Auswerteeinheit (3).

## Claims

1. Protective arrangement (1) comprising a printed circuit board (2),
a cover (8) arranged at least on one side of the printed circuit board (2), wherein the cover (8) has randomly arranged conductor tracks (6), and
an evaluation unit (3), wherein the evaluation unit (3) is connected to the conductor tracks (6) and is suitable for electronically checking the conductor tracks (6) for manipulation,
**characterized**
**in that** the cover (8) consists of a plastic admixed with additives, and
**in that** the conductor tracks (6) consist of the additives which are activated by means of a laser and are subsequently metallized.

2. Protective arrangement (1) according to Claim 1, wherein the cover (8) is arranged on one side of the printed circuit board (2).

3. Protective arrangement (1) according to Claim 2, wherein the cover (8) comprises a fixing pin (7), which is connected to the printed circuit board (2).

4. Protective arrangement (1) according to Claim 1, wherein a respective cover (8) is arranged on both sides of the printed circuit board (2).

5. Protective arrangement (1) according to Claim 4,
wherein the covers (8) are connected to one another via fixing pins (7).

6. Protective arrangement (1) according to any of the preceding claims,
wherein the evaluation unit (3) is arranged on the printed circuit board (2).

7. Protective arrangement (1) according to Claim 3 or 5,
wherein the evaluation unit (3) is electrically connected to the fixing pin or pins (7).

8. Protective arrangement (1) according to Claim 7,
wherein the evaluation unit (3) is suitable for registering damage to a fixing pin (7).

9. Protective arrangement (1) according to any of the preceding claims,
wherein the evaluation unit (3) is electrically connected to the conductor tracks (6) via contact means (5).

10. Protective arrangement (1) according to any of the preceding claims, wherein the evaluation unit (3) is suitable for registering damage to a conductor track (6).

11. Protective arrangement (1) according to any of the preceding claims,
wherein the evaluation unit (3) evaluates data with regard to the electrical properties of the conductor tracks (6) preferably with regard to the resistances, capacitance and/or inductance.

12. Protective arrangement (1) according to Claim 11,
wherein the evaluation unit (3) is suitable for registering, on the basis of the electrical properties of the conductor tracks (6), a manipulation that does not damage the conductor tracks (6), in particular a contact-connection and/or bridging of the conductor tracks (6).

13. Method for producing a protective arrangement (1) comprising the following steps:
- producing (S1) a cover (8),
- generating (S2) random parameters,
- creating (S3, S4) conductor tracks (6) on the cover (8), said conductor tracks being arranged randomly by means of the random parameters, and
- arranging the cover (8) on at least one side of a printed circuit board (2),
**characterized**
**in that** producing the cover (8) comprises the following steps:
- providing a plastic admixed with additives, and
- injection-moulding (S1) a plastic hood as cover (8), and
**in that** creating the conductor tracks (6) comprises the following steps:
- activating (S3) the additives by means of a laser,
- metallizing (S4) the activated conductor tracks (6).

14. Method according to Claim 13,
comprising metallizing (S4) the activated conductor tracks (6) by means of a chemical bath.

15. Method according to either of Claims 13 and 14,
wherein metallizing (S4) comprises applying a layer composed of copper, nickel, gold, tin, lead, and/or silver.

16. Method according to any of the preceding claims,
comprising providing (S5) an evaluation unit (3), which is connected to the conductor tracks (6) and is suitable for electronically checking the conductor tracks (6) for manipulation.

17. Method according to Claim 16,
comprising calculating (S6) electrical properties of the conductor tracks (6) and communicating (S7) the calculated data to the evaluation unit (3).

## Revendications

1. Agencement de protection ou de sécurité (1) comprenant
une plaque de circuit imprimé (2),
un élément de recouvrement (8) agencé sur au moins une face de la plaque de circuit imprimé (2), l'élément de recouvrement (8) présentant des pistes conductrices (6) agencées de manière aléatoire, et
une unité de traitement de données (3), l'unité de traitement de données (3) étant reliée aux pistes conductrices (6) et adaptée à vérifier ou contrôler par voie électronique les pistes conductrices (6) quant à leur non manipulation frauduleuse,
**caractérisé**
**en ce que** l'élément de recouvrement (8) est constitué d'une matière plastique mélangée à des additifs, et
**en ce que** les pistes conductrices (6) sont constituées par les additifs activés au moyen d'un laser et ensuite métallisés.

2. Agencement de protection (1) selon la revendication 1,
dans lequel l'élément de recouvrement (8) est agencé sur une face de la plaque de circuit imprimé (2).

3. Agencement de protection (1) selon la revendication 2,
dans lequel l'élément de recouvrement (8) comporte un tenon de fixation (7) qui est relié à la plaque de circuit imprimé (2).

4. Agencement de protection (1) selon la revendication 1,
dans lequel un élément de recouvrement (8) est respectivement agencé sur chacune des deux faces de la plaque de circuit imprimé (2).

5. Agencement de protection (1) selon la revendication 4,
dans lequel les éléments de recouvrement (8) sont reliés mutuellement par l'intermédiaire de tenons de fixation (7).

6. Agencement de protection (1) selon l'une des revendications précédentes,
dans lequel l'unité de traitement de données (3) est agencée sur la plaque de circuit imprimé (2).

7. Agencement de protection (1) selon la revendication 3 ou la revendication 5,
dans lequel l'unité de traitement de données (3) est reliée électriquement au tenon de fixation, respectivement aux tenons de fixation (7).

8. Agencement de protection (1) selon la revendication 7,
dans lequel l'unité de traitement de données (3) est adaptée à enregistrer une détérioration d'un tenon de fixation (7).

9. Agencement de protection (1) selon l'une des revendications précédentes,
dans lequel l'unité de traitement de données (3) est reliée électriquement aux pistes conductrices (6) par l'intermédiaire de moyens de contact (5).

10. Agencement de protection (1) selon l'une des revendications précédentes,
dans lequel l'unité de traitement de données (3) est adaptée à enregistrer une détérioration d'une piste
conductrice (6).

11. Agencement de protection (1) selon l'une des revendications précédentes,
dans lequel l'unité de traitement de données (3) évalue ou traite des données relatives aux propriétés électriques des pistes conductrices (6), de préférence relatives aux résistances, à la capacité et/ou à l'inductance.

12. Agencement de protection (1) selon la revendication 11,
dans lequel l'unité de traitement de données (3) est adaptée, sur la base des propriétés électriques des pistes conductrices (6), à enregistrer une manipulation frauduleuse non destructrice des pistes conductrices (6), notamment une mise en contact et/ou un pontage des pistes conductrices (6).

13. Procédé de fabrication pour un agencement de protection (1), présentant les étapes :
- fabrication (S1) d'un élément de recouvrement (8),
- génération (S2) de paramètres aléatoires,
- réalisation (S3, S4) de pistes conductrices (6) agencées, moyennant les paramètres aléatoires, de manière aléatoire sur l'élément de recouvrement (8), et
- disposition de l'élément de recouvrement (8) sur au moins une face d'une plaque de circuit imprimé (2), **caractérisé**
**en ce que** la fabrication de l'élément de recouvrement (8) comprend les étapes suivantes :
- préparation d'une matière plastique mélangée à des additifs, et
- moulage par injection (S1) d'un capot en matière plastique en tant qu'élément de recouvrement (8),
et **en ce que** la réalisation des pistes conductrices (6)
comprend les étapes suivantes :
- activation (S3) des additifs au moyen d'un laser, et
- métallisation (S4) des pistes conductrices (6) activées.

14. Procédé selon la revendication 13,
comprenant la métallisation (S4) des pistes conductrices (6) activées, au moyen d'un bain chimique.

15. Procédé selon l'une des revendications 13 ou 14,
selon lequel la métallisation (S4) comprend l'application d'une couche en cuivre, nickel or, étain, plomb et/ou argent.

16. Procédé selon l'une des revendications précédentes,
comprenant la préparation (S5) d'une unité de traitement de données (3), qui est reliée aux pistes conductrices (6), et est adaptée à vérifier ou contrôler par voie électronique les pistes conductrices (6) quant à leur non manipulation frauduleuse.

17. Procédé selon la revendication 16,
comprenant le calcul (S6) de propriétés électriques des pistes conductrices (6), et le transfert (S7) des données calculées à l'unité de traitement de données (3).
